Europäisches Patentamt

European Patent Office

Office européen des brevets

(19)

(11) Veröffentlichungsnummer: **0 017 272 B1**

(12) **EUROPÄISCHE PATENTSCHRIFT**

(45) Veröffentlichungstag der Patentschrift:
15.06.83

(21) Anmeldenummer: 80200193.3

(22) Anmeldetag: 03.03.80

(51) Int. Cl.³: **F 41 G 1/40,** F 41 G 11/00,
G 02 B 23/16

(54) Vorrichtung zum Abweisen äusserer Wettereinflüsse vom Ausblick eines in ein bewaffnetes Fahrzeug eingebauten Richtperiskops.

(30) Priorität: 29.03.79 CH 2900/79

(43) Veröffentlichungstag der Anmeldung:
15.10.80 Patentblatt 80/21

(45) Bekanntmachung des Hinweises auf die Patenterteilung:
15.06.83 Patentblatt 83/24

(84) Benannte Vertragsstaaten:
BE CH DE FR GB IT NL SE

(56) Entgegenhaltungen:
DE-C-661 055
FR-A-390 788
FR-A-392 968
FR-A-1 432 792
GB-A-580 493
GB-A-1 246 416

(73) Patentinhaber: Werkzeugmaschinenfabrik
Oerlikon-Bührle AG, Birchstrasse 155, CH-8050 Zürich
(CH)

(72) Erfinder: Mayer, Cornelius, Wigartenstrasse 12,
CH-8117 Fällanden (CH)
Erfinder: Durrer, Jörg, Zürcherstrasse 152,
CH-8102 Oberengstringen (CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Vorrichtung zum Abweisen äußerer Wettereinflüsse vom Ausblick eines in ein bewaffnetes Fahrzeug eingebauten Richtperiskops

Die Erfindung betrifft eine Vorrichtung zum Abweisen äußerer Wettereinflüsse vom Ausblick eines in ein bewaffnetes Fahrzeug eingebauten Richtperiskops, das mit seinem den Ausblick aufweisenden Teil aus einem Kampfraum des Fahrzeuges hinausragt, wobei dieser Teil von einer Schutzglocke umgeben ist.

Bei einer bisher verwendeten Lösung wurde die den Ausblick des Richtperiskops bildende Glasscheibe auf einer Heizplatte gelagert, wodurch ein Abtrocknen des unter Wettereinfluß stehenden Ausblickes von innen bewirkt wurde. Von Nachteil war dabei die relativ lange Einlaufzeit, bis die gewünschte Wirkung entstand, sowie die Notwendigkeit zusätzlicher elektrischer Verbindungen. Zudem war der aus dem Kampfraum hinausragende Teil des Richtperiskops einem großen Temperatur-Unterschied gegenüber dem sich im obersten Teil des Kampfraumes befindenden Teil ausgesetzt.

Es ist ferner bekannt, den Ausblick eines Periskops durch einen Luftstrahl zu beaufschlagen, der aus einer Düse austritt, die am Umfang des Ausblickes angeordnet ist (GB 580 493).

Dabei ist aber die Verteilung des Luftstrahles über die ganze Fläche des Ausblickes ungleichmäßig, bzw. in den Randbereichen ungenügend, um eine Verschmutzung oder ein Anlaufen des ganzen Ausblickes zu verhindern.

Es ist bekannt, zwischen einem Kameraobjektivsystem und einem äußeren Schutzmantel einen Luftstrom zu leiten, um das System zu kühlen und Staub vom System fernzuhalten (GB-A-1 246 416).

Die Erfindung, wie sie im Anspruch 1 gekennzeichnet ist, löst die Aufgabe, eine Vorrichtung der eingangs genannten Art zu schaffen, bei der die Optik des Richtperiskops gegen äußere Wettereinflüsse, Verschmutzung des Ausblickes und große Temperaturdifferenzen über die Länge des Richtperiskops besser geschützt ist.

Weiterbildungen der Erfindung sind den Ansprüchen 2 – 4 entnehmbar.

Die durch die Erfindung erzielten Vorteile sind insbesondere darin zu sehen, daß ein rasches und sichere Abweisen der Tropfen, Flocken und auch des Staubes etc. erfolgt. Durch die beidseitige Beaufschlagung des Schutzfensters durch den Luftstrom wird dieses am Anlaufen auf wirkungsvollste Art verhindert. Durch die spezielle Führung des Luftstromes zwischen Periskop und Schutzglocke einerseits, sowie innerhalb der Wand der Schutzglocke andererseits findet ein Temperaturausgleich zwischen dem sich im Kampfraum befindenden und dem aus dem Kampfraum herausragenden Teil des Richtperiskopes statt. Wird der Überdruck im Kampfraum zur Erzeugung des Luftstromes verwendet, so wird zusätzlich eine vorteilhafte Entlüftung des obersten Bereiches des Kampfraumes gewährleistet, in welchem bekanntlich der Schütze oft unangenehmen Bedingungen ausgesetzt wird. Das Richtperiskop wird üblicherweise leicht schwenkbar in der Wand des Fahrzeuges eingebaut, um die vertikale Achse ins Lot bringen zu können. Es war bis jetzt üblich, zwischen dem schwenkbaren Teil und der Wand einen Gummibalg als Dichtung einzubauen, der ebenfalls den äußeren Wettereinflüssen schutzlos ausgesetzt war. Durch die erfindungsgemäße Lösung konnten auch diese Einflüsse eliminiert und eine verbesserte Abdichtung geschaffen werden.

Ein Ausführungsbeispiel der erfindungsgemäßen Vorrichtung wird im folgenden anhand der Zeichnung näher beschrieben. Es zeigt

Fig. 1 ein Richtperiskop und eine Schutzglocke im Schnitt,

Fig. 2 einen Schnitt nach Linie II-II in Fig. 1.

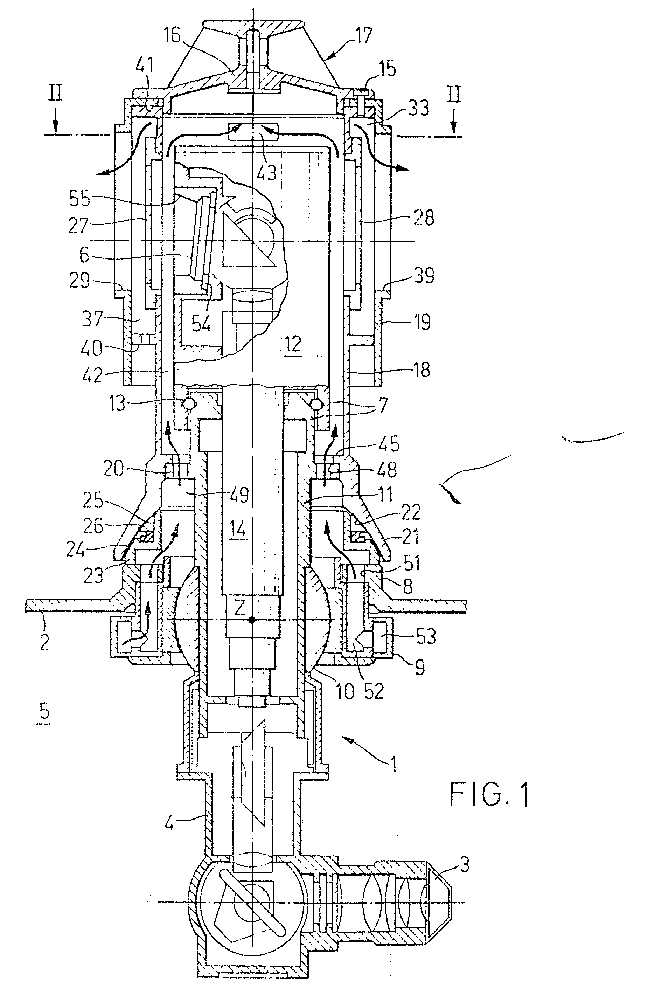

Gemäß Fig. 1 ist ein Richtperiskop 1 in einer oberen Wand 2 eines nicht näher dargestellten bewaffneten Fahrzeuges derart eingebaut, daß sich ein mit einem Einblick 3 versehener Teil 4 des Richtperiskops 1 in einem Kampfraum 5 des Fahrzeuges befindet, während ein mit einem Ausblick 6 versehener Teil 7 aus dem Kampfraum 5 hinausragt. Die Wand 2 des Fahrzeuges weist einen Ansatz 8 auf, in welchem auf der Kampfraumseite ein Lagerkörper 9 befestigt ist. Im Lagerkörper 9 ist über eine kugelförmige Lagerfläche 10 ein hülsenförmiger Körper 11 des Richtperiskops 1 derart gelagert, daß ein Schwenken seiner vertikalen Achse im Bereich eines virtuellen Kegelmantels möglich ist, dessen Kegelspitze im Zentrum Z der kugelförmigen Lagerfläche 10 liegt und dessen Öffnungswinkel ca. 10° beträgt.

Auf dem hülsenförmigen Körper 11 ist ein Kopf 12 des Richtperiskops 1 über ein Lager 13 drehbar gelagert. Der Drehantrieb des Kopfes 12 wird aus dem Kampfraum 5 gesteuert und ist in der Zeichnung nicht näher dargestellt. Ein die Optik umfassender Teil 14 des Richtperiskops 1 ist mit dem Kopf 12 drehfest verbunden und im hülsenförmigen Körper 11 drehbar angeordnet.

Der aus dem Kampfraum 5 hinausragende Teil 7 des Richtperiskops ist von einer Schutzglocke 17 umgeben. Die Schutzglocke 17 weist einen inneren Mantel 18 sowie einen äußeren Mantel 19 auf, die miteinander und mit einem Glockenkopf 16 mittels Schrauben 15 oder anderer Befestigungsmittel verbunden sind. Mit einem Flansch 45 des inneren Mantels 18 ist die Schutzglocke 17 auf einen Flansch 20 des drehfesten Körpers 11 aufgesetzt. Auf dem unteren Ende weist der innere Mantel 18 der Schutzglocke 17 eine Erweiterung 21 auf, die mit einer kugelförmigen inneren Lagerfläche 22 versehen ist. Am Ansatz 8 der Wand 7 ist ein Ringkörper 23 befestigt, der mit einer kugelförmigen äußeren Lagerfläche 24 ausgestattet ist. Die beiden kugelförmigen Lagerflächen 22, 24 liegen einander gegenüber, wobei das Zentrum dieser beiden Flächen 22, 24 mit dem Zentrum Z der Lagerfläche 10 zusammenfällt. In einer der beiden Lagerflächen 22, 24, gegebenenfalls in der dem Ringkörper 23 zugeordneten Lagerfläche 24, ist eine Umfangsnut 25 angebracht, in welcher sich ein Dichtungsring 26 befindet.

Im inneren Mantel 18 der Schutzglocke 17 sind zwei diametral gegenüberliegende Schutzfenster 27, 28 angeordnet, von denen das eine, 27, in der Schußrichtung der Fahrzeugbewaffnung orientiert ist. Der äußere Mantel 19 ist mit zwei den Schutzfenstern 27, 28 zugeordneten Austrittsöffnungen 29, 39 versehen. In Fig. 1 ist diejenige Stellung des Kopfes 12 dargestellt, in welcher der Ausblick 6 in die Schußrichtung gerichtet und somit dem Schutzfenster 27 sowie der Austrittsöffnung 29 zugewandt ist. Der Kopf 12 mit dem Ausblick 6 ist mittels des erwähnten Drehantriebes auch in eine entgegengesetzte Stellung schwenkbar (Ausblick nach hinten).

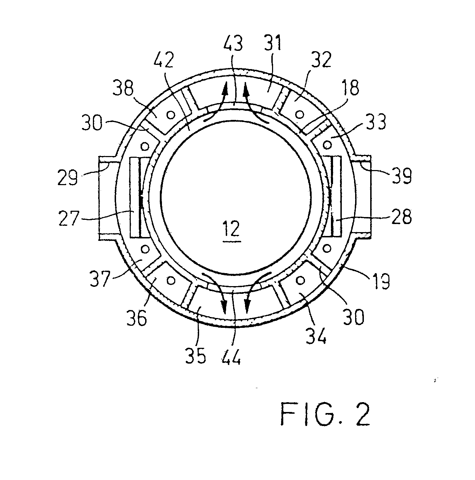

Der innere Mantel 18 ist ferner gemäß Fig. 2 mit Rippen 30 versehen, die den inneren Umfang des Mantels 19 dichtend berühren. Der innere Mantel 18 mit seinen Rippen 30 und der Mantel 19 bilden Labyrinthkanäle 31 bis 38 (in Fig. 2 im Uhrzeigersinn numeriert), die in axialer Richtung durch einen unteren Flansch 40 einerseits und einen oberen Flansch 41 am inneren Mantel 18 anderseits begrenzt sind (Fig. 1).

Ein zwischen dem Kopf 12 des Richtperiskops 1 und dem inneren Mantel 18 der Schutzglocke 17 vorhandener Raum 42 ist gemäß Fig. 1 und 2 über zwei im oberen Bereich des Teiles 18 angeordnete, sich gegenüberliegende und um 90° gegenüber den Schutzfenstern 27, 28 versetzte Eintrittsöffnungen 43, 44 mit den Labyrinthkanälen 31, 35 verbunden. Der Labyrinthkanal 31 ist einerseits über den Kanal 32 mit dem Kanal 33 und anderseits über den Kanal 38 mit dem Kanal 37 verbunden. Ähnlich besteht eine Verbindung des Kanals 35 einerseits über den Kanal 34 mit dem Kanal 33 und anderseits über den Kanal 36 mit dem Kanal 37. Die Labyrinthkanäle 33 und 37 münden über die Austrittsöffnungen 39 und 29 in die Atmosphäre.

Nach unten ist der Raum 42 über Bohrungen 48 im Flansch 20 des Körpers 11 mit einem einerseits durch den Körper 11 und anderseits durch den Mantel 18 der Schutzglocke 17 bzw. durch den Ringkörper 23 begrenzten Raum 49 verbunden. Dieser Raum 49 steht ferner über Bohrungen 51 im Ansatz 8 der Wand 2 und über im Lagerkörper 9 angefertigte Kanäle 52, 53 mit dem Kampfraum 5 bzw. mit einer nicht näher dargestellten Zwangsbelüftungsquelle in Verbindung.

Der optische Teil des Richtperiskops 1 ist in der Zeichnung nur teilweise dargestellt und wird nicht näher beschrieben. Die den Ausblick 6 bildende Glasscheibe ist auf einer Paltte 54 im Kopf 12 über eine Fassung 55 befestigt.

Aus dem beschriebenen Aufbau ergibt sich folgende Wirkungsweise:

Aus dem unter Überdruck stehenden Kampfraum 5 des bewaffneten Fahrzeuges (bzw. von einer nicht näher dargestellten Zwangsbelüftungsquelle) strömt die Druckluft gemäß den in Fig. 1 gezeichneten Pfeilen über die im Lagerkörper 9 vorhandenen Kanäle 53, 52 und über die im Ansatz 8 angebrachten Bohrungen 51 in den Raum 49, von wo sie über Bohrungen 48 in den Raum 42 zwischen der Schutzglocke 17 und dem Kopf 12 gelangt. Nach oben am Ausblick 6 vorbei strömend, tritt die Druckluft durch die Eintrittsöffnungen 43, 44 in die Labyrinthkanäle 31, 35 ein (vgl. Pfeile in Fig. 1 und 2). Während in den Kanälen 31, 35 die Druckluft nach unten strömt, wird dieser in den angeschlossenen Kanälen 32, 38 und 34, 36 eine Aufwärtsrichtung erteilt, bis sie schließlich wieder von oben herabfallend aus den Kanälen 37 und 33 an den Schutzfenstern 27 und 28 vorbei durch die Austrittsöffnungen 29 und 39 in die Atmosphäre gelangt. Beim Austritt aus den Labyrinthkanälen 37, 33 weist dabei die strömende Druckluft die Außeneinflüsse — Tropfen, Flocken, Staub etc. — von den Schutzfenstern 27, 28 wirksam ab. Der Ausblick 6 wird somit praktisch dreifach vor Wettereinflüssen geschützt: erstens durch die im Raum 42 direkt am Ausblick 6 strömende Druckluft, zweitens durch die Schutzfenster 27 bzw. 28 selber und drittens durch das Abweisen der Wettereinflüsse von den Schutzfenstern 27, 28 durch die aus den Labyrinthkanälen 31 bis 38 strömende Luft, die sozusagen einen Warmluftvorhang an den Schutzfenstern 27, 28 bildet.

Durch die schwenkbare Lagerung des hülsenförmigen Körpers 11 in der Wand 2 bzw. in dem in der Wand 2 befestigten Lagerkörper 9 wird eine Anpassung an die Unebenheiten des Terrains ermöglicht. Die vertikale Achse des Richtperiskops 1 kann im Bereich des erwähnten virtuellen Kegelmantels geschwenkt und somit jeweils ins Lot gebracht werden. Die notwendige Abdichtung zwischen dem schwenkbaren Richtperiskop 1 und der Wand 2 wird nun vorteilhafterweise durch den zwischen der inneren Lagerfläche 22 der mitgeschwenkten Schutzglocke 17 und der äußeren Lagerfläche 24 des wandfesten Ringes 23 untergebrachten Dichtungsring 26 realisiert. Der Dichtungsring 26 ist von den Außeneinflüssen geschützt. Die in den Spalt zwischen den beiden Lagerflächen 22, 24 eventuell eindringende Feuchtigkeit wird durch den Luftdruck aus dem Raume 49 nach außen verdrängt.

Während der mit dem Einblick 3 versehene Teil 4 des Richtperiskops 1 der Temperatur des Kampfraumes 5 ausgesetzt ist, muß außerhalb des Kampfraumes 5 mit Temperaturschwankungen von −40° bis +80° gerechnet werden. Durch die Anordnung der Schutzglocke 17 und durch die Luftströmung werden die Temperaturunterschiede zwischen dem Teil 4 und dem aus dem Kampfraum 5 hinausragenden Teil 7 des Richtperiskops 1 mindestens teilweise ausgeglichen. Wird der Überdruck im Kampfraum 5 zur Erzeugung der Luftströmung ausgenützt, so findet zudem eine vorteilhafte Entlüfung gerade des obersten Teiles des Kampfraumes 5 statt, in welchem sich der Schütze befindet und der oft schlechte Bedingungen für den Schützen bietet.

Das dargestellte Ausführungsbeispiel zeigt acht Labyrinthkanäle zwischen dem inneren Mantel 18 und dem äußeren Mantel 19 der Schutzglocke 17. Die die Kanäle 31 bis 38 voneinander trennden Rippen 30 und Flansche 40, 41 sind am inneren Mantel 18 angebracht. Selbstverständlich könnten sie jedoch dem äußeren Mantel 19 zugeordnet werden. Am Wesen der Erfindung wird nichts geändert, wenn eine andere Anzahl oder gar Form der Kanäle gewählt wird. Auch die Anzahl der Schutzfenster oder der Austrittsöffnungen ist nicht erfindungswesentlich.

Die erfindungsgemäße Vorrichtung findet eine Verwendung beim Einbau der Richtperiskope in verschiedene Panzerfahrzeugbewaffnungen, z. B. Kanonen, Raketenwerfer, Haubitzen, Mörser etc.

## Patentansprüche

1. Vorrichtung zum Abweisen äußerer Wettereinflüsse vom Ausblick (6) eines in ein bewaffnetes Fahrzeug eingebauten Richtperiskops (1), das mit seinem den Ausblick (6) aufweisenden Teil (7) aus einem Kampfraum (5) des Fahrzeuges hinausragt, wobei dieser Teil (7) von einer Schutzglocke (17) umgeben ist, dadurch gekennzeichnet, daß die Schutzglocke (17) einen inneren Mantel (18) und einen äußeren Mantel (19) aufweist, daß der innere Mantel mit mindestens einem dem Ausblick (6) zugeordneten Schutzfenster (27) und der äußere Mantel (19) mit mindestens einer gegenüberliegenden Austrittsöffnung (29) versehen sind, daß zwischen der Schutzglocke (17) und dem Teil (7) Luftkanäle (49, 48, 42, 31 bis 38) vorhanden sind, über welche ein Luftstrom am Ausblick (6) vorbei nach außen gefördert wird, und daß ein erster Teil (49, 48, 42) der Luftkanäle zwischen dem inneren Mantel (18) und dem Teil (7) des Richtperiskops (1) und ein zweiter Teil (31 bis 38) der Luftkanäle zwischen dem inneren Mantel (18) und dem äußeren Mantel (19) gebildet sind.

2. Vorrichtung nach Anspruch 1, dadurch gekennzeichnet, daß der zweite Teil (31 bis 38) der Luftkanäle als Labyrinthkanäle ausgebildet ist, die über eine im oberen Bereich des inneren Mantels (18) angeordnete Eintrittsöffnung (43 bzw. 44) mit dem ersten Teil (49, 48, 42) der Luftkanäle verbunden sind, und daß der Luftstrom beim Austritt aus dem zweiten Teil (31 bis 38) der Luftkanäle an dem Schutzfenster (27) vorbei herabfallend in die Austrittsöffnung (28) gelenkt wird.

3. Vorrichtung nach Anspruch 1, bei welcher der aus dem Kampfraum hinausragende Teil des Richtperiskops (1) einen mit dem Ausblick (6) versehenen, aus einer Schußstellung in eine entgegengesetzte Stellung um 180° verschwenkbaren Kopf (12) aufweist, dadurch gekennzeichnet, daß die Schutzglocke (17) auf einen drehfesten Körper (11) des aus dem Kampfraum (5) hinausragenden Teiles (7) aufgesetzt ist, und daß der innere Mantel (18) der Schutzglocke (17) zwei den beiden Stellungen des Kopfes (12) zugeordnete Schutzfenster (27, 28) aufweist und der äußere Mantel (19) mit zwei den Schutzfenstern (27, 28) gegenüberliegenden Austrittsöffnungen (29, 39) versehen ist.

4. Vorrichtung nach Anspruch 1, bei welcher der aus dem Kampfraum (5) hinausragende Teil (7) über eine kugelförmige Lagerfläche (24) in einer Wand (2) und dem schwenkbaren Teil ein Dichtungselement angeordnet ist, dadurch gekennzeichnet, daß die Schutzglocke (17) mit dem Teil (7) verbunden ist und eine kugelförmige innere Lagerfläche (22) aufweist, die einer kugelförmigen, der Wand (2) zugeordneten, äußeren Lagerfläche (24) gegenüberliegt, daß das Dichtungselement als ein Dichtungsring (26) zwischen den beiden Lagerflächen (22, 24) in einer Umfangsnut (25) angeordnet ist und von innen durch den Druck des Luftstromes belastet ist.

## Claims

1. Apparatus for repelling external weather effects from an objective lens system (6) of an aiming periscope (1), mounted in an armed combat vehicle and having a part (7) protruding out of a combat compartment (5) of the combat vehicle and a protective hood (17) surrounding said protruding part (7), characterised in that the protective hood (17) comprises an inner part (18) and an outer jacket (19), said inner part (18) being provided with at least one protective window (27) operatively associated with said objective lens system (6), said outer jacket (19) being provided with at least one outlet opening (29) situated opposite said protective window (27) and in that air channels (49, 48, 42, 31 to 38) are provided between said protective hood (17) and said protruding part (7) through which these can be conveyed an air current which flows past the objective lens system (6) towards the outside, and in that a first group (49, 48, 42) of said air channels are arranged between the inner part (18) of the protective hood (17) and said protruding part (7) of said periscope (1) and a second group (31 to 38) of air channels are formed between the inner part (7) of the protective hood (17) and said outer jacket (19).

2. Apparatus according to claim 1, characterised in that said second group (31 to 38) of air channels are structured as labyrinth channels and communicating with said first group (49, 48, 42) of air channels through a inlet opening (43, 44) located at the upper region of said inner part (18) of the protective hood (18) and in that said air current, during departure from said second group (31 to 38) to air channels moves past said protective window (27) and is deflected through said outlet opening (29).

3. Apparatus according to claim 1, wherein said protruding part (7) of said aiming periscope (1) contains a head member (12) provided with said objective lens system (6) and pivotable from a firing position into an opposite position through an angle of 180°, characterised in that said protective hood (17) is mounted upon a non-rotatable body member (11) provided for the protruding part (7) of the periscope (1), in that said inner part of said protective hood (17) contains two protective windows (27, 28) which are operatively associated with respective ones of said two positions of said head member (12) and in that said outer jacket (19) is provided with two outlet openings (29, 39) situated respectively opposite said two protective windows (27, 28).

4. Apparatus according to claim 1, wherein said combat vehicle has a wall (2) and a spherical-shaped bearing surface (24) for pivotably mounting said protruding part (7) of said periscope (1) in said wall (2) and a sealing element arranged between said wall and said pivotable protruding part (7), characterised in that said protective hood (17) is connected with said protruding part (7) provided with a spherical-shaped inner bearing surface (22) operatively associated with the external bearing surface (24), and in that said sealing element comprises a sealing ring member (28) arranged in a circumferential groove (25) between both of said bearing surfaces (22, 24) and being loaded by the pressure of the air current.

## Revendications

1. Dispositif pour éliminer des influences des intempéries extérieures de la fenêtre (6) d'un périscope (1) de direction monté dans un véhicule armé, périscope (1) dont la partie (7) comportant la fenêtre (6) est en saillie par rapport à une enceinte (5) de combat du véhicule, enceinte (5) entourée par une cloche de protection (17), caractérisé en ce que la cloche de protection (17) comporte une partie intérieure (18) et une partie extérieure (19) et en ce que la partie intérieure (18) est munie d'au moins une fenêtre de protection (27) associée à la fenêtre (6) et l'enveloppe extérieure (19) est munie d'au moins un orifice de sortie (28) opposé, en ce qu'entre la cloche de protection (17) et la partie (7) se trouvent des canaux d'air (49, 48, 42, 31 à 38) par lesquels un courant d'air est envoyé vers l'extérieur sur la fenêtre (6) et en ce qu'une première partie (49, 48, 42) des canaux d'air est formée entre la partie intérieure (18) de la cloche de protection (17) et la partie (7) du périscope de direction (1) et une seconde partie (31 — 38) des canaux d'air est formée entre la partie intérieure (18) et l'enveloppe extérieure (19).

2. Dispositif selon la revendication 1, caractérisé en ce que la seconde partie (31 — 38) des canaux d'air est réalisée en forme de canaux en labyrinthe qui sont reliés à la première partie (49, 48, 42) des canaux d'air par un orifice d'entrée (43, 44) prévu dans la zone supérieure de la partie intérieure (18) et en ce que la veine d'air à la sortie de la seconde partie (31 — 38) des canaux d'air est déviée dans l'orifice de sortie (28) en descendant devant la fenêtre de protection (27).

3. Dispositif selon la revendication 1 dans lequel la partie (7) du périscope (1) de direction en saillie par rapport à l'enceinte (5) est munie d'une fenêtre (6) et se compose d'une tête (12) basculant de 180° dans la position opposée, dispositif caractérisé en ce que la cloche de protection (17) est mise sur un corps (11) solidaire en rotation de la partie (7) en saillie de l'enceinte (5) et en ce que la partie intérieure (18) de la cloche de protection (17) comporte deux fenêtres de protection (27) associées aux deux positions de la tête (12) et l'enveloppe extérieure (19) est munie de deux orifices de sortie (28) opposés aux fenêtres de protection (27).

4. Dispositif selon la revendication 1, dans lequel la partie (7) en saillie de l'enceinte (5) de combat est montée basculante dans un paroi (2) du véhicule par l'intermédiaire d'une surface (24) de palier de forme sphérique, et entre la paroi (2) et la partie basculante (7), il est prévu un élément d'étanchéité, dispositif caractérisé en ce que la cloche de protection (17) est reliée à la partie (7) et comporte une surface de palier (22) intérieure, de forme sphérique, à laquelle est associée une paroi (2) de forme sphérique, qui en regard de la surface de palier (24) extérieure, et en ce que l'élément d'étanchéité est disposé sous forme de bague d'étanchéité (26) entre les deux surfaces de palier (22, 24) dans une rainure périphérique (25) et est chargé de l'intérieur par la pression de la veine d'air.

FIG. 1

FIG. 2